# EUROPEAN PATENT APPLICATION

(11) **EP 4 173 491 A1**
(43) Date of publication of application: **03.05.2023**
(21) Application number: 21832288.1
(22) Date of filing: 25.06.2021
(51) Int. Cl.: A23G 3/54, A23L 5/00

(54) **INGREDIENT-STUFFED SOFT CANDY**

(30) Priority: 29.06.2020 JP 2020111663
(71) Applicant: Morinaga & Co., Ltd., Tokyo 108-8403 (JP)
(72) Inventor: SUZUKI, Miku, Yokohama-shi, Kanagawa 230-8504 (JP); SUZUKI, Yoko, Yokohama-shi, Kanagawa 230-8504 (JP); ITO, Eriko, Yokohama-shi, Kanagawa 230-8504 (JP); YAMAGUCHI, Takahiro, Yokohama-shi, Kanagawa 230-8504 (JP); KERA, Ryosuke, Yokohama-shi, Kanagawa 230-8504 (JP)
(74) Representative: Mewburn Ellis LLP
(86) International application number: PCT/JP2021/024151
(87) International publication number: WO 2022/004595

(57) **Abstract**

An object of the present invention is to provide an ingredient-stuffed soft candy that provides both of the texture of an ingredient felt during eating and the feeling of integration between the ingredient and a soft candy dough, and the shape retainability of the soft candy and to provide a soft candy that can provide a natural juicy feeling coming from the ingredient.

The ingredient-stuffed soft candy includes an ingredient, a center dough containing the ingredient, and an outer-layer dough covering the center dough,
in which the ingredient has a hardness of 1050 g or less at normal temperature, and
the hardness of the center dough at normal temperature is relatively lower than the hardness of the outer-layer dough at normal temperature.

## Description

### Technical Field

The present invention relates to an ingredient-stuffed soft candy.

### Background Art

Conventionally, soft candies having soft texture have been known (for example, Patent Literature 1).

Such ingredient-stuffed soft candies that contain ingredients such as gummies and jellies in the soft candies are also known (for example, Patent Literature 2 and Patent Literature 3).

### Citation List

### Patent Literature

Patent Literature 1: WO 02/009530 A
Patent Literature 2: JP 3555597 B
Patent Literature 3: JP H4-370063 A

### Summary of Invention

### Technical Problem

In conventional soft candies containing gummies, it is difficult to feel the texture of gummies until the soft candy dough is sufficiently softened in the mouth at the time of eating.

On the other hand, when the soft candy dough is sufficiently softened in the mouth, most of the soft candy dough is dissolved at the same time, so that only the gummy separated from the soft candy finally remains in the mouth, and it is difficult to obtain a feeling of integration of taste and texture (combination preference) of the gummy and the soft candy dough.

Therefore, an subject of the present invention is to provide an ingredient-stuffed soft candy that enables the tastiness of the ingredient contained therein to be fully felt while giving a feeling of integration between the dough and the ingredient.

### Solution to Problem

The present invention to solve the above problems is an ingredient-stuffed soft candy including an ingredient, a center dough containing the ingredient, and an outer-layer dough covering the center dough, in which the ingredient has a hardness of 1050 g or less at normal temperature, and the hardness of the center dough at normal temperature is relatively lower than the hardness of the outer-layer dough at normal temperature.

The present invention can provide a soft candy that enables the tastiness of the ingredient contained therein to be fully felt while giving a feeling of integration between the dough and the ingredient.

In addition, the soft candy of the present invention also retains the original texture like a soft candy that does not melt immediately after the start of chewing and can be kept chewed for a certain period of time (such as about 30 seconds).

In a preferred mode of the present invention, the hardness of the center dough at normal temperature is 370 g or less as measured by the following measurement method using a texture analyzer.

### [Measurement Method]

(1) The dough is formed into a cylinder or a rectangular parallelepiped having a thickness of 11 mm and having a measurement surface including a circle having a diameter of 11 mm to provide a shaped product.
(2) The shaped product is fixed to a sample stage of the texture analyzer, and the product temperature is maintained at 20°C.
(3) A measurement probe (cylindrical shape with a diameter of 0.9 mm) of the analyzer is lowered at a speed of 1 mm/sec, the measurement probe is made to enter a surface in the vicinity of the center of the measurement surface of the shaped product, and a load is measured within a range of a maximum load of 5 kg.
(4) When the measurement probe has entered 14 mm from the surface of the shaped product (that is, the measurement probe has penetrated the shaped product), the measurement probe is raised.

The present invention can provide a soft candy that enables the tastiness of the ingredient contained therein to be fully felt while giving a feeling of integration between the dough and the ingredient.

In a preferred mode of the present invention, the hardness of the outer-layer dough at normal temperature is 150 to 1100 g as measured by the same measurement method as that for the center dough.

According to the present invention, it is possible to provide a soft candy having the texture (constant hardness) like a conventional soft candy as a whole and having shape retainability.

In a preferred mode of the present invention, the sugar ratio of the center dough is higher than the sugar ratio of the outer-layer dough.

According to the present invention, the center dough can be made relatively softer than the outer-layer dough without increasing the water content and water activity value of the center dough.

In a preferred mode of the present invention, the sugar ratio of the center dough is higher than the sugar ratio of the outer-layer dough.

In a more preferred mode, the water content of the outer-layer dough is larger than the water content of the center dough.

According to the present invention, the hardness of the center dough can be made relatively lower than the hardness of the outer-layer dough, and the difference in water activity can be reduced. Therefore, it is possible to suppress a decrease in the difference between the hardness of the center dough and the hardness of the outer-layer dough due to water transfer and to maintain the softness of the center dough.

In a preferred mode of the present invention, the water content of the center dough is 12 mass% or less with respect to the entire center dough excluding the ingredient, and the water activity of the center dough is 0.7 or less.

According to the present invention, the difference in hardness between the center dough and the outer-layer dough at normal temperature (20°C) can be maintained. In addition, the texture of the ingredient can be maintained.

In a preferred mode of the present invention, the content of the ingredient with respect to the center dough is 40 mass% or less.

In a preferred mode of the present invention, the ingredient is a gel-like food composition or dried fruit.

### Advantageous Effects of Invention

The present invention can provide a soft candy that enables the tastiness of the ingredient contained therein to be fully felt while giving a feeling of integration between the dough and the ingredient.

### Brief Description of Drawings

Fig. 1 schematically illustrates an ingredient-stuffed soft candy according to the present invention.
Fig. 2 illustrates the relationship between the chewing time (seconds) and the total amount of saliva (g) when a panelist A chews ingredient-stuffed soft candies of Example 2 and Comparative Example 2 in Test Example 1.
Fig. 3 illustrates the relationship between the chewing time (seconds) and the total amount of saliva (g) when a panelist B chews the ingredient-stuffed soft candies of Example 2 and Comparative Example 2 in Test Example 1.
Fig. 4 illustrates the relationship between the chewing time (seconds) and the total amount of saliva (g) when a panelist C chews the ingredient-stuffed soft candies of Example 2 and Comparative Example 2 in Test Example 1.
Fig. 5 illustrates the relationship between the chewing time (seconds) and the total amount of saliva (g) when a panelist D chews the ingredient-stuffed soft candies of Example 2 and Comparative Example 2 in Test Example 1.

### Description of Embodiments

In the present specification, "to" representing a numerical range means that numerical values specified before and after "to" are included as a lower limit value and an upper limit value.

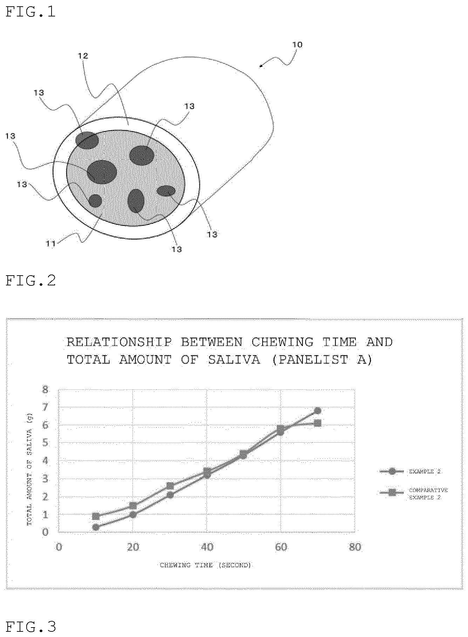

A soft candy 10 according to the present invention includes an ingredient 13, a center dough 11 including the ingredient, and an outer-layer dough 12 covering the center dough (see Fig. 1).

In the present invention, "covering the center dough" means that at least a part of the surface of the center dough 11 is covered with the outer-layer dough 12. That is, the outer-layer dough 12 does not necessarily cover the entire surface of the center dough 11. The outer-layer dough 12 is only required to cover at least 50% or more of the surface of center dough 11. Preferably, the outer-layer dough covers 80% or more of the surface of the center dough.

The center dough 11 and the outer-layer dough 12 of the invention of the present application can be composed of components conventionally used for soft candies and usually contain a saccharide and vegetable fat or oil.

The type of saccharide is not particularly limited as long as it is usually used for food. For example, monosaccharides such as glucose and fructose, disaccharides such as sugar, maltose, and lactose, oligosaccharides or polysaccharides such as starch syrup and maltodextrin, sugar alcohols such as sorbitol, and the like can be used.

In the present specification, the "saccharide" includes all the above saccharides usually used for food and is not limited to monosaccharides and disaccharides.

In addition, the digestibility is not particularly limited, and indigestible ones are also included.

As the saccharide, one type of saccharide may be used, or two or more types of saccharides may be used in combination.

It is preferable to use sugar and/or starch syrup as the saccharide.

The center dough preferably contains sugar.

In the present invention, the content of the saccharide in the center dough excluding the ingredient is preferably 40 mass% or more and preferably 45 mass% or more in terms of the solid content of the saccharide excluding water.

In the present invention, the content of the saccharide in the center dough excluding the ingredient can be appropriately set considering the intended texture and production suitability (stickiness, shape retainability, crushing of the ingredient, extensibility of the soft candy, and the like), and for example, in the center dough excluding the ingredient, the solid content of the saccharide excluding water can be 84 mass% or less.

When the saccharide contains starch syrup, water contained in the starch syrup is excluded to calculate the solid content of the saccharide.

The physical properties such as the melting point of the vegetable fat or oil is not particularly limited as long as it is usually used for food. For example, rapeseed oil or hardened oil thereof can be used.

As the vegetable fat or oil, one type of vegetable fat or oil may be used, or two or more types of vegetable fats and oils may be used.

In the present invention, the content of the vegetable fat or oil in the center dough excluding the ingredient is preferably 3 mass% or more and preferably 5 mass% or more.

In the present invention, the content of the vegetable fat or oil in the center dough excluding the ingredient can be appropriately set considering the intended texture and production suitability (stickiness, shape retainability, crushing of the ingredient, extensibility of the soft candy, and the like) and can be, for example, 20 mass% or less, preferably 15 mass% or less.

In the center dough of the invention of the present application, in addition to the above components, components usually used for foods, such as emulsifiers, sweeteners, colorants, preservatives, stabilizers, flavoring agents, and flavors, can be appropriately used according to the intended taste and appearance.

In addition, a processed product of sugar usually used for food, such as fondant and frappe, can be appropriately used.

In the invention of the present application, the hardness of the center dough at normal temperature (20°C) is relatively lower than the hardness of the outer-layer dough. That is, at normal temperature, the center dough is softer than the outer-layer dough.

The present mode can provide a soft candy that provides the texture of the ingredient and the feeling of integration between the taste and texture of the soft candy dough and the ingredient (preference by simultaneously feeling both).

In addition, the soft candy of the present invention includes the outer-layer dough having a relatively high hardness and therefore also retains the original texture like a soft candy that does not melt immediately after the start of chewing and can be kept chewed for a certain period of time (such as about 30 seconds).

Examples of a method for adjusting the hardness of the center dough include the following. For example, the hardness of the dough can be reduced as the amount of sugar crystals is increased. In addition, the hardness of the dough can be reduced as the content ratio of starch syrup having a short chain length (that is, having a low viscosity) is increased. In addition, the hardness can be reduced as the content of the fat or oil is increased. The hardness of the dough can also be reduced by adding glycerin.

In a preferred mode of the present invention, as a method for making the center dough softer than the outer-layer dough at normal temperature, a method is employed in which the amount of sugar crystals in the center dough is caused to be larger than the amount of sugar crystals in the outer-layer dough.

Specifically, by setting the total amount of sucrose with respect to the solid amount of sugar in the center dough (total amount of sucrose contained in dough/total sugar solid amount; hereinafter also referred to as a sugar ratio) to be higher than the sugar ratio in the outer-layer dough, the amount of sugar crystals in the center dough can be made larger than the amount of sugar crystals in the

### outer-layer dough.

Here, the "total sugar solid amount" refers to the solid amount of all the saccharides contained in the dough. That is, it refers to the total of the above saccharides usually used for food, such as monosaccharides, disaccharides, oligosaccharides, polysaccharides, and sugar alcohols.

The sugar ratio is calculated on the basis of the total amount of sucrose in the dough. Therefore, when powdered sugar, fondant, frappe, or the like is used as an auxiliary raw material other than sugar, the sugar ratio including the amount of sucrose contained therein is calculated.

When the sugar ratio of the center dough is made relatively higher than the sugar ratio of the outer-layer dough by the above method, the amount of sugar crystals formed in the center dough is relatively larger than the amount of sugar crystals formed in the outer-layer dough.

Then, it is possible to make the amount of water retained in the amorphous portion of the center dough relatively larger than the amount of water retained in the amorphous portion of the outer-layer dough without increasing the water content in the center dough or increasing the water activity of the center dough.

Due to the difference in the water content retained in the amorphous portions, the center dough can be made relatively softer and better in melt-in-the-mouth quality than the outer-layer dough.

In addition, according to the present mode, even in the case where the outer-layer dough has a higher water content than the center dough, when the water activity of the outer-layer dough and the center dough reaches equilibrium over time, a difference in water content of the dough to be described later and a difference in texture (difference in texture indicating that the center dough is softer than the outer-layer dough) can be maintained.

Furthermore, when the amount of sugar crystals in the center dough is increased, the crystal skeleton in the dough increases. This makes it possible to provide a dough having a certain degree of shape retainability despite the soft texture.

The sugar ratio of the center dough is preferably 50 to 75 mass%, more preferably 53 to 73 mass%.

According to the present mode, the center dough can be a soft and melt-in-the-mouth dough.

The sugar ratio of the outer-layer dough is preferably 40 to 70 mass%, more preferably 45 to 61 mass%.

In the present invention, the difference between the sugar ratio of the center dough and the sugar ratio of the outer-layer dough (sugar ratio of center dough - sugar ratio of outer-layer dough) is preferably 5 to 35 mass%, more preferably 8 to 28 mass%.

According to the present mode, the difference between the hardness of the center dough and the hardness of the outer-layer dough can be maintained.

The hardness of the dough at normal temperature can be measured by a known method. For example, measurement can be performed by the following measurement method using a texture analyzer TA.XT plus (manufactured by EKO Instruments Co., Ltd.).

### [Measurement Method]

(1) The dough is formed into a cylinder or a rectangular parallelepiped having a thickness of 11 mm and having a measurement surface including a circle having a diameter of 11 mm to provide a shaped product.
(2) The shaped product is fixed to a sample stage of the texture analyzer, and the product temperature is maintained at 20°C.
(3) A measurement probe (cylindrical shape with a diameter of 0.9 mm) of the analyzer is lowered at a speed of 1 mm/sec, the measurement probe is made to enter a surface in the vicinity of the center of the measurement surface of the shaped product, and a load is measured within a range of a maximum load of 5 kg.
(4) When the measurement probe has entered 14 mm from the surface of the shaped product (that is, the measurement probe has penetrated the shaped product), the measurement probe is raised.

In the present invention, the hardness of the center dough excluding the ingredient measured by the above measurement method is preferably 370 g or less, more preferably 350 g or less, still more preferably 300 g or less.

The present mode can provide a soft candy that provides tastiness (feeling of presence or juicy feeling of the ingredient) of the ingredient itself, the feeling of integration between the taste and texture of the soft candy dough and the ingredient (preference by simultaneously feeling both), and the texture like a soft candy.

In the present invention, the hardness of the center dough excluding the ingredient measured by the above measurement method can be appropriately set considering production suitability (stickiness, shape retainability, crushing of the ingredient, extensibility of the soft candy, and the like) and the intended texture and can be, for example, 140 g or more.

In the present invention, the hardness of the outer-layer dough measured by the above measurement method is preferably 1100 g or less, more preferably 1050 g or less, still more preferably 1000 g or less.

The present mode can provide a deeper feeling of integration of the ingredient, the center dough, and the outer-layer dough.

In the present invention, the hardness of the outer-layer dough measured by the above measurement method is preferably 150 g or more, more preferably 200 g or more.

The present mode can provide chewing sensation like a soft candy. In addition, it is possible to suppress stickiness during molding.

In the present invention, the difference between the hardness of the center dough and the hardness of the outer-layer dough at normal temperature (20°C) measured by the above measurement method is preferably 40 g or more and preferably 80 g or more.

The present mode can provide an ingredient-stuffed soft candy that provides the feeling of integration with the ingredient while retaining the original texture like a soft candy that does not melt immediately after the start of chewing and can be kept chewed for a certain period of time (such as about 30 seconds).

In the present invention, the difference between the hardness of the center dough and the hardness of the outer-layer dough at normal temperature (20°C) measured by the above measurement method is preferably 850 g or less, more preferably 800 g or less.

The present mode can provide a soft candy that enables the tastiness of the ingredient to be fully felt while providing the feeling of integration between the taste and texture of the soft candy dough and the ingredient (preference by simultaneously feeling both).

In the present invention, the water content in the center dough excluding the ingredient is preferably 12 mass% or less, more preferably 10 mass% or less.

According to the present mode, the difference in hardness between the center dough and the outer-layer dough at normal temperature (20°C) can be maintained. In addition, the texture of the ingredient can be maintained.

In the present invention, the water content of the center dough excluding the ingredient can be appropriately set considering production suitability (stickiness, shape retainability, crushing of the ingredient, extensibility of the soft candy, and the like) and hygiene and can be 5 mass% or more.

The water content can be measured by a known method. For example, it can be measured by a heating drying aid method under reduced pressure using sea sand as an aid.

The heating drying aid method under reduced pressure can be performed by the following method.

### [Drying Aid Method under Reduced Pressure]

About 3 to 5 g of a sample (in the present invention, the prepared center dough or outer-layer dough) is collected on an aluminum flat-bottom weighing dish containing sea sand that is dried in a dry heat oven (ADVANTEC FS-33) at 102°C and has a constant weight, and the sample was precisely weighed. Next, the sample is carefully heated on a water bath to evaporate most of water, and then the sample is placed in a dry heat oven and dried until it reaches a constant weight.

In the present invention, the water activity of the center dough excluding the ingredient is preferably 0.7 or less, more preferably 0.65 or less.

The present mode can suppress water transfer to the outer-layer dough and can maintain a state in which the hardness of the center dough at normal temperature (20°C) is relatively lower than the hardness of the outer-layer dough (that is, a state in which the center dough is relatively softer than the outer-layer dough at normal temperature (20°C)).

In the present invention, the water activity of the center dough excluding the ingredient can be appropriately set considering production suitability (stickiness, shape retainability, crushing of the ingredient, extensibility of the soft candy, and the like) and hygiene and can be, for example, 0.3 or more.

In the present invention, as the outer-layer dough, a known soft candy dough can be used. For example, soft candies disclosed in WO 02/009530 A and WO 2011/033954 A can be used as the outer-layer dough. The composition, water content, water activity, sugar ratio, and the like of the outer-layer dough can be appropriately adjusted on the basis of the above documents.

In the present invention, the mass of the outer-layer dough when the mass of the center dough including the ingredient is regarded as 1 is preferably 0.4 or more, more preferably 0.5 or more.

The present mode can provide a soft candy having shape retainability.

In the present invention, the mass of the outer-layer dough when the mass of the center dough excluding the ingredient is regarded as 1 is preferably 1.8 or less, more preferably 1.5 or less.

The present mode can provide a soft candy that enables the tastiness of the ingredient to be fully felt while having a texture like a soft candy.

In the present invention, the volume ratio between the center dough excluding the ingredient and the outer-layer dough can be, for example, 4 : 1 to 1 : 4.

In the present invention, it is preferable that the difference between the water content (mass%) of the center dough excluding the ingredient and the water content (mass%) of the outer-layer dough be not significantly large. The water content (mass%) of the center dough excluding the ingredient may be larger than the water content (mass%) of the outer-layer dough or may be smaller than the water content (mass%) of the outer-layer dough.

Preferably, the water content (mass%) of the center dough excluding the ingredient is smaller than the water content (mass%) of the outer-layer dough (that is, the water content (mass%) of the outer-layer dough is larger than the water content (mass%) of the center dough excluding the ingredient).

The value obtained by subtracting the water content (mass%) of the center dough excluding the ingredient from the water content (mass%) of the outer-layer dough (water content of outer-layer dough - water content of center dough) is preferably -2 to 6 mass%, more preferably 0 to 4 mass%.

According to the present mode, the state in which the center dough is relatively softer than the outer-layer dough can be maintained.

Immediately after the production of the soft candy according to the present invention (that is, before water is transferred), it is preferable to reduce the difference between the water activity value of the center dough and the water activity value of the outer-layer dough.

Specifically, the difference between the water activity value of the center dough and the water activity value of the outer-layer dough is preferably 0.1 or less, more preferably 0.05 or less.

According to the present mode, during storage of the soft candy according to the present invention, water transfer between the center dough and the outer-layer dough can be suppressed, and the difference in hardness between the center dough and the outer-layer dough can be maintained.

The above-described adjustment of the difference in water content and the difference in water activity is preferably performed by causing the sugar ratio of the center dough to be relatively higher than the sugar ratio of the outer-layer dough and causing the water content of the center dough to be relatively smaller than the water content of the outer-layer dough as described above.

In a preferred mode of the present invention, the sugar ratio of the center dough is relatively higher than the sugar ratio of the outer-layer dough, and the water content (mass%) of the outer-layer dough is equal to or higher than the water content (mass%) of the center dough.

According to the present mode, the hardness of the center dough can be made relatively lower than the hardness of the outer-layer dough, and the difference in water activity can be reduced. Therefore, it is possible to suppress a decrease in the difference between the hardness of the center dough and the hardness of the outer-layer dough due to water transfer.

In the present invention, the ingredient can be used without particular limitation as long as it is a solid or semi-solid food. For example, fruit (including dried ones) and gel-like food compositions can be used.

The ingredient is preferably a gel-like food composition or dried fruit.

Specifically, the gel-like food composition contains at least one gelling agent selected from gelatin, pectin, agar, and a polysaccharide thickener.

In particular, when a gel-like food composition mainly containing gelatin as a gelling agent is used, the presence of the ingredient in the soft candy can be felt during eating. The gel-like food product mainly containing gelatin as a gelling agent is, for example, gummy.

When a gel-like food composition mainly containing pectin as a gelling agent is used, the juicy feeling coming from the ingredient can be felt during eating. The gel-like food composition mainly containing pectin as a gelling agent is, for example, jelly.

As the ingredient, commercially available foods may be used, or foods produced by a known method may be used.

When the gel-like food composition is used as the ingredient, the taste of the gel-like food composition itself is not particularly limited, and for example, a fruit taste (such as strawberry, orange, and mango) or a beverage taste (such as soda taste and cola taste) can be used.

When dried fruit is used, the type of the dried fruit itself is not particularly limited, and for example, dried strawberry, papaya, prune, or the like can be used.

The hardness of the ingredient is preferably 100 g or more at normal temperature (20°C).

According to the present mode, it is possible to feel the tastiness (feeling of presence and/or juicy feeling of the ingredient) of the ingredient itself.

The hardness of the ingredient at normal temperature (20°C) is preferably 1050 g or less, more preferably 1000 g or less.

The present mode can provide a soft candy that enables the tastiness of the ingredient itself to be fully felt and provides the feeling of integration between the taste and texture of the soft candy dough and the ingredient (preference by simultaneously feeling both).

For example, when a gel-like food composition mainly containing gelatin as a gelling agent is used as the ingredient, the hardness of the ingredient at normal temperature (20°C) is preferably 300 g or more, more preferably 350 g or more.

When a gel-like food composition mainly containing gelatin as a gelling agent is used as the ingredient, the hardness of the ingredient at normal temperature (20°C) is preferably 1050 g or less, more preferably 1000 g or less.

According to the present mode, it is possible to fully feel the tastiness of the ingredient itself, particularly the feeling of presence and moderate elasticity of the ingredient.

For example, when a gel-like food composition mainly containing pectin as a gelling agent is used as the ingredient, the hardness of the ingredient at normal temperature (20°C) is preferably 100 g or more.

When a gel-like food composition mainly containing pectin as a gelling agent is used as the ingredient, the hardness of the ingredient at normal temperature (20°C) is preferably 250 g or less.

When a gel-like food composition mainly using pectin as a gelling agent is used as the ingredient, it is possible to fully feel the tastiness of the ingredient itself, particularly the juicy feeling (flavor coming from ingredient felt immediately after the start of chewing to the first half of chewing of the soft candy) coming from the ingredient.

For example, when the dried fruit is used as the ingredient, the hardness of the ingredient at normal temperature (20°C) is preferably 250 g or less.

When the dried fruit is used as the ingredient, the hardness of the ingredient at normal temperature (20°C) is preferably 150 g or more.

According to the present mode, it is possible to fully feel the tastiness of the ingredient itself, particularly the flavor of the material.

The hardness of the ingredient at normal temperature (20°C) can be measured by a known method. For example, measurement can be performed by the following measurement method using the above texture analyzer.

### [Measurement Method]

(1) A measurement sample (ingredient) is fixed to a sample stage of the texture analyzer, and the sample temperature is maintained at 20°C. As the measurement sample, a granular, spherical, or rectangular parallelepiped sample having the longest portion of 10 mm or less and having a mass of 1 g or less per piece is selected. A relatively flat surface in the measurement sample is used as a measurement surface.
   In the present specification, the "longest portion" refers to a portion having the largest length among lengths of portions of the ingredient that can be measured. For example, in the case of a spherical ingredient, it refers to the length of the diameter, and in the case of a rectangular parallelepiped ingredient, it refers to the length of the longest side.
(2) A measurement probe (cylindrical shape with a diameter of 0.9 mm) of the texture analyzer is lowered at a speed of 1 mm/sec, the measurement probe is made to enter a surface in the vicinity of the center of the measurement surface of the ingredient, and a load is measured within a range of a maximum load of 5 kg.
(3) When the measurement probe has penetrated the bottom surface of the ingredient, the measurement probe is raised.

When a gel-like food composition is used as the ingredient, the hardness of the ingredient can be adjusted by the amount of the gelling agent used. For example, when gelatin is used as the gelling agent, 2 to 13 mass% of gelatin can be contained per one gel-like food composition. When pectin is used as the gelling agent, 1 to 5 mass% of pectin can be contained per one gel-like food composition.

The water content of the ingredient is preferably 3 mass% or more, more preferably 5 mass% or more.

The water content of the ingredient is preferably 25 mass% or less, more preferably 20 mass% or less.

The present mode can provide a soft candy that provides the feeling of integration between the taste and texture of the soft candy dough and the ingredient (preference by simultaneously feeling both) when put in the mouth.

For example, when a gel-like food composition mainly containing gelatin as a gelling agent is used as the ingredient, the water content of the ingredient itself is preferably 7 mass% or more, more preferably 10 mass% or more.

When a gel-like food composition mainly containing gelatin as a gelling agent is used as the ingredient, the water content of the ingredient itself is preferably 25 mass% or less, more preferably 20 mass% or less.

The present mode can provide the feeling of integration with the soft candy dough.

When a gel-like food composition mainly containing gelatin as a gelling agent is used as the ingredient, the feeling of presence of the ingredient including elasticity coming from the ingredient can be felt.

For example, when a gel-like food composition mainly containing pectin as a gelling agent is used as the ingredient, the water content of the ingredient itself is preferably 7 mass% or more, more preferably 10 mass% or more.

When a gel-like food composition mainly containing pectin as a gelling agent is used as the ingredient, the water content of the ingredient itself is preferably 25 mass% or less, more preferably 20 mass% or less.

The present mode can provide the feeling of integration with the soft candy dough.

When a gel-like food composition mainly containing pectin as a gelling agent is used as the ingredient, the juicy feeling coming from the ingredient can be felt.

In the case where dried fruit is used as the ingredient, the water content of the ingredient itself is preferably 3 mass% or more, more preferably 5 mass% or more.

In the case where dried fruit is used as the ingredient, the water content of the ingredient itself is preferably 25 mass% or less, more preferably 20 mass% or less.

The present mode can provide the feeling of integration with the soft candy dough.

The mass of the ingredient is preferably 0.1 g or more, more preferably 0.14 g or more, still more preferably 0.2 g or more per grain of the ingredient.

According to the present mode, it is possible to feel the tastiness (feeling of presence and/or juicy feeling of the ingredient) of the ingredient itself.

The upper limit of the mass of the ingredient can be appropriately set from the viewpoint of production suitability (stickiness, shape retainability, crushing of the ingredient, extensibility of the soft candy, and the like) and can be, for example, 1.5 g or less, preferably 1.0 g or less.

The amount of the ingredient is preferably 10 mass% or more, more preferably 15 mass% or more, with respect to the center dough excluding the ingredient.

According to the present mode, it is possible to feel the texture (such as presence or juicy feeling) of the ingredient during eating.

The amount of the ingredient is preferably 45 mass% or less, more preferably 40 mass% or less, with respect to the center dough excluding the ingredient.

The soft candy according to the present invention can be produced, for example, by a method including the following steps.
(1) A saccharide, water, a vegetable fat or oil, and an emulsifier as necessary are mixed and emulsified to prepare each of a center dough base raw solution and an outer-layer dough base raw solution.
(2) After the center dough base and the outer-layer dough base are each boiled down, the auxiliary raw materials (raw materials other than the raw materials mixed in (1)) are kneaded to prepare a center dough and an outer-layer dough.
(3) The ingredient is mixed with the prepared center dough base to prepare an ingredient-stuffed center dough base.
(4) The prepared ingredient-stuffed center dough base and outer-layer dough base are formed into desired shapes.

In the step (1), the above matters can be applied to each raw material. In addition, the raw materials can be mixed using a known method and a known apparatus. For example, a super mixer can be used. Further, after the preparation of each dough, emulsification is preferably performed with a super mixer or the like in a state of being heated to 70 to 90°C.

In the step (2), boiling down can be performed using a known apparatus. Preferably, boiling down is performed under reduced pressure so that coloring will not be caused.

In the step (3), the above items can be applied to the ingredient mixed to the center dough. For mixing the center dough and the ingredient, a known device such as the super mixer can be used.

In the steps (1) to (3), components usually used for food, such as sweeteners, colorants, preservatives, stabilizers, flavoring agents, and flavors, and processed products of sugar such as fondant and frappe can be further mixed as auxiliary raw materials.

As a processed product of sugar such as fondant and frappe, for example, a product prepared by a known method can be used.

In the step (4), shaping can be performed using a known apparatus.

For example, using a known apparatus, the entire ingredient-stuffed center dough can be extruded so as to be covered with the outer-layer dough and cut into a desired size to perform shaping.

In addition, the ingredient-stuffed center dough is extrusion-molded and cut to be formed into a desired size and shape (such as a substantially rectangular parallelepiped shape), and then at least a part of the shaped ingredient-stuffed center dough is covered with the outer-layer dough, whereby shaping can be performed.

Alternatively, the ingredient-stuffed center dough may be filled into a mold having a desired shape (such as a substantially rectangular parallelepiped shape) and molded, and then the outer-layer dough covers at least a part of the ingredient-stuffed center dough, whereby shaping can be performed.

In addition to the above steps, a known step usually performed in the process of producing a soft candy, such as a step of removing distortion of the soft candy after shaping, may be included.

### Examples

Hereinafter, the present invention will be described in more detail with reference to examples, but the technical scope of the present invention is not limited to the following examples.

### <Test Example 1>

In this test example, the influence of the hardness of the center dough on the texture of the soft candy was tested.

An ingredient-stuffed soft candy was prepared by the following method.

### (1) Preparation of Outer-Layer Dough

### (Step 1) Preparation of Outer-Layer Dough Base Raw Solution

In a super mixer, 24 parts by weight of sugar, 49 parts by weight of starch syrup, 10 parts by weight of water, 0.1 parts by weight of a sorbitan fatty acid ester, and 0.1 parts by weight of a sucrose fatty acid ester having HLB of 11 were mixed, and the mixture was heated to 80°C while being stirred. Next, 8 parts by weight of rapeseed oil was mixed and emulsified with stirring to provide an outer-layer dough base raw solution.

### (Step 2) Preparation of Outer-Layer Dough Base

The outer layer dough base raw solution obtained in the above (step 1) was boiled down at a degree of vacuum of 600 mmHg and a temperature of 118°C using a known pot with a water content in the outer layer dough base raw solution calculated so that the water content of each dough at the end of the later-described (step 5) was 8.2 mass%, and the product was then cooled to 70°C to provide an outer-layer dough base.

### (Step 3) Preparation of Fondant

In a solution tank, 70 parts by weight of sugar, 30 parts by weight of starch syrup, and 20 parts by weight of water were mixed and boiled down at 121°C until the water content reached 10 wt%. Then, the resulting mixture was cooled to 70°C and kneaded to provide a fondant having a particle size of 30 um or less.

### (Step 4) Preparation of Frappe

After 75 parts by weight of sugar, 75 parts by weight of starch syrup, and 25 parts by weight of water were mixed, the mixture was boiled down at 118°C until the sugar content reached 90 °Bx and then cooled to 70°C. Separately, 10 parts by weight of gelatin (gel strength: 200 bloom, particle size: 4-mesh pass 100%, 20-mesh on 90%) was dissolved in water that was twice as heavy as the gelatin at 80°C to perform defoaming, and then the solution was cooled to 70°C (gelatin solution). Then, both were mixed at 8 : 1 (weight ratio) to provide frappe. The sugar content of the obtained frappe was 80 °Bx.

### (Step 5) Mixing of Outer-Layer Dough Base, Fondant, Frappe, etc.

After 82 parts by weight of the outer-layer dough base, 13 parts by weight of the fondant, and 2 parts by weight of the gelatin solution prepared in the above (step 4) were mixed, the mixture was kneaded for 30 seconds or more. The temperature after kneading was 70°C. Next, an acidulant, fruit juice, a flavor, and a colorant were added thereto, the frappe was further added thereto, and the mixture was stirred for 30 seconds or more. The temperature after stirring was 65°C. Then, the product was cooled to 45°C to provide an outer-layer dough.

To change the hardness of the outer-layer dough, the sugar ratio was adjusted. Specifically, when the outer-layer dough was intended to be harder, the sugar ratio in the composition was decreased, and when the outer-layer dough is intended to be softer, the sugar ratio in the composition was increased. The sugar ratio was adjusted by the amount of sugar contained in the base and the amounts of powdered sugar, fondant, and frappe contained in the auxiliary raw materials. In addition, the chain length of starch syrup, the water content value, and the amount of the fat or oil were prepared to achieve the hardness described in Table 1 below.

### (2) Preparation of Center Dough

A center dough having a different hardness was prepared in the same manner as in the above "(1) Preparation of Outer-Layer Dough" except for the following two points.

A center dough base raw solution was prepared by using 13 parts by weight of sugar, 26 parts by weight of starch syrup, 10 parts by weight of water, 0.1 parts by weight of a sorbitan fatty acid ester, 0.1 parts by weight of a sucrose fatty acid ester, and 8 parts by weight of rapeseed oil in the above (step 1).

In the above (step 2), the water content in the center dough base raw solution was calculated so that the water in the dough at the end of the above (step 5) was 6.5% to perform boiling down.

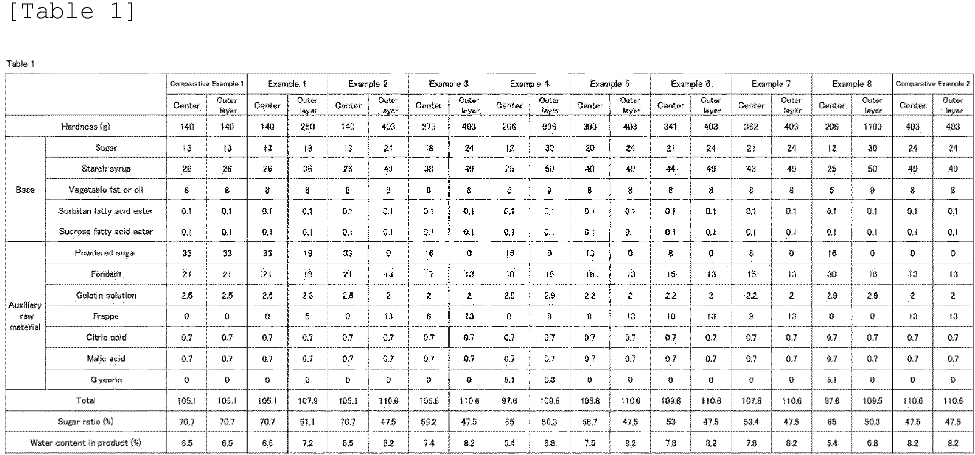

The hardness of the prepared center dough and outer-layer dough at normal temperature (20°C) was measured by the following measurement method using a texture analyzer TA.XT plus (manufactured by EKO Instruments Co., Ltd.).

### [Measurement Method]

(1) The dough is formed into a cylinder or a rectangular parallelepiped having a thickness of 11 mm and having a measurement surface including a circle having a diameter of 11 mm to provide a shaped product.
(2) The shaped product is fixed to a sample stage of the texture analyzer, and the product temperature is maintained at 20°C.
(3) A measurement probe (cylindrical shape with a diameter of 0.9 mm) of the analyzer is lowered at a speed of 1 mm/sec, the measurement probe is made to enter a surface in the vicinity of the center of the measurement surface of the shaped product, and a load is measured within a range of a maximum load of 5 kg.
(4) When the measurement probe has entered 14 mm from the surface of the shaped product (that is, the measurement probe has penetrated the shaped product), the measurement probe is raised.

### (3) Preparation of Ingredient-Stuffed Center Dough

The center dough prepared in the above (2) and an ingredient were mixed together to prepare an ingredient-stuffed center dough.

As the ingredient, gummies (gel-like food composition mainly containing gelatin as gelling agent) and jellies (gel-like food composition mainly containing pectin as gelling agent) were used.

A Gummy having a weight of 0.28 g per grain, a hardness of 747 g at normal temperature, and a water content of 18 mass% was added and mixed so as to be 20 mass% in the center dough.

A Jelly having a weight of 0.28 g per grain, a hardness of 109 g at normal temperature, and a water content of 17 mass% was added and mixed so as to be 20 mass% in the center dough.

For the doughs of Example 4 and Example 8, ingredient-stuffed center doughs using the gummy as the ingredient were prepared, and for the doughs of Comparative Examples 1 and 2, Examples 1 to 3, and Example 5 to 7, two types of center doughs including ingredient-stuffed center doughs using the gummy as the ingredient and ingredient-stuffed center doughs using the jelly as the ingredient were prepared.

### (4) Shaping of Ingredient-Stuffed Soft Candy

The ingredient-stuffed center dough and the outer-layer dough prepared as described above were shaped to provide an ingredient-stuffed soft candy.

In the shaping, first, the prepared ingredient-stuffed center dough was formed into a rectangular shape. Next, the shaped ingredient-stuffed center dough was covered with the prepared outer-layer dough to provide an ingredient-stuffed soft candy. The mass of the resulting ingredient-stuffed soft candy per piece was 4.7 to 5.0 g.

### (5) Evaluation

Among the produced ingredient-stuffed soft candies, Example 2 and Comparative Example 2 were evaluated for the tastiness (feeling of presence of the ingredient (feeling of integration of taste and texture between the soft candy dough and the ingredient) or juicy feeling (flavor coming from the ingredient felt immediately after the start of chewing to the first half of chewing of the soft candy)) of the ingredient and the texture like a soft candy.

The evaluation was performed by four skilled evaluators.

The feeling of presence of the ingredient (feeling of integration of taste and texture between the soft candy dough and the ingredient) was evaluated for the ingredient-stuffed soft candies of Example 2 and Comparative Example 2 using the gummy as the ingredient according to the following evaluation criteria.

When all the evaluators judged that they could enjoy preferable texture of the ingredient for a long time from an early stage of eating while feeling of integration between the dough and the ingredient for the ingredient-stuffed soft candy to be evaluated, the feeling of presence of the ingredient was rated as **⊙**.

When three of the evaluators judged that they could enjoy preferable texture of the ingredient for a long time from an early stage of eating while feeling of integration between the dough and the ingredient for the ingredient-stuffed soft candy to be evaluated, the feeling of presence of the ingredient was rated as o.

When two of the evaluators judged that they could enjoy preferable texture of the ingredient for a long time from an early stage of eating while feeling of integration between the dough and the ingredient for the ingredient-stuffed soft candy to be evaluated, the feeling of presence of the ingredient was rated as △.

When none or one of the evaluators judged that they could enjoy preferable texture of the ingredient for a long time from an early stage of eating while feeling of integration between the dough and the ingredient for the ingredient-stuffed soft candy to be evaluated, the feeling of presence of the ingredient was rated as ×.

The juicy feeling (flavor coming from the ingredient felt immediately after the start of chewing to the first half of chewing of the soft candy) felt during eating was evaluated according to the following evaluation criteria for the ingredient-stuffed soft candies of Example 2 and Comparative Example 2 using the jelly as the ingredient.

First, a sample soft candy (about 5.0 g) without ingredients formed with a dough prepared by the same method as in the above "(1) Preparation of Outer-Layer Dough" was continuously chewed at a rate of once/sec, saliva was discharged into a container every 10 seconds without being swallowed, and the total amount of saliva (g) after elapse of 10 seconds was measured. This procedure was repeated until the ingredient-stuffed soft candy was melted and disappeared in the mouth.

Next, the ingredient-stuffed soft candies of Example 2 and Comparative Example 2 were tested in the same manner to measure the total amount of saliva (g) every 10 seconds from the start of chewing of the ingredient-stuffed soft candy until the ingredient-stuffed soft candy was melted and disappeared in the mouth.

An ingredient-stuffed soft candy that resulted in the same amount of saliva as the amount of saliva at the time of chewing of the sample soft candy scored 0 in terms of the juicy feeling.

An ingredient-stuffed soft candy that resulted in an amount of saliva 1.1 times as large as the amount of saliva at the time of chewing of the sample soft candy scored 1 in terms of the juicy feeling.

A soft candy that resulted in an amount of saliva 1.2 times as large as the amount of saliva at the time of chewing of the sample soft candy scored 2 in terms of the juicy feeling.

The average of the scores given by the evaluators was calculated, and the rating **⊙** was given when the average score was 1.6 to 2, the rating o was given when the average score was 0.6 to 1.5, the rating △ was given when the average score was 0.1 to 0.5, and the rating × was given when the average score was 0.

The texture like a soft candy was evaluated by determining whether the produced ingredient-stuffed soft candy (about 4.7 to 5.0 g per piece) was able to be continuously chewed at a rate of once/sec for 30 seconds or more.

An ingredient-stuffed soft candy that was able to be continuously chewed at a rate of once/sec for 30 seconds or more was rated as o as the evaluation of the texture like a soft candy by each evaluator.

An ingredient-stuffed soft candy that was not able to be continuously chewed for 30 seconds or more (that is, it melted and disappeared in the mouth before 30 seconds elapsed) or an ingredient-stuffed soft candy that was not able to be easily softened for 30 seconds when being continuously chewed at a rate of once/sec was rated as × as the evaluation of the texture like a soft candy by each evaluator.

When all the evaluators gave o in the evaluation by every evaluator, the comprehensive evaluation of the texture like a soft candy was rated as **⊙**. When three of the evaluators gave o, the comprehensive evaluation of the texture like a soft candy was rated as o. When one or two of the evaluators gave o, the comprehensive evaluation of the texture like a soft candy was rated as △. When none of the evaluators gave o, the comprehensive evaluation of the texture like a soft candy was rated as ×.

The ratings of the ingredient-stuffed soft candies of Example 2 and Comparative Example 2 in the case of using the gummy as the ingredient are shown in Table 2 below, and the evaluation results of the ingredient-stuffed soft candies of Example 2 and Comparative Example 2 in the case of using the jelly as the ingredient are shown in Table 3.

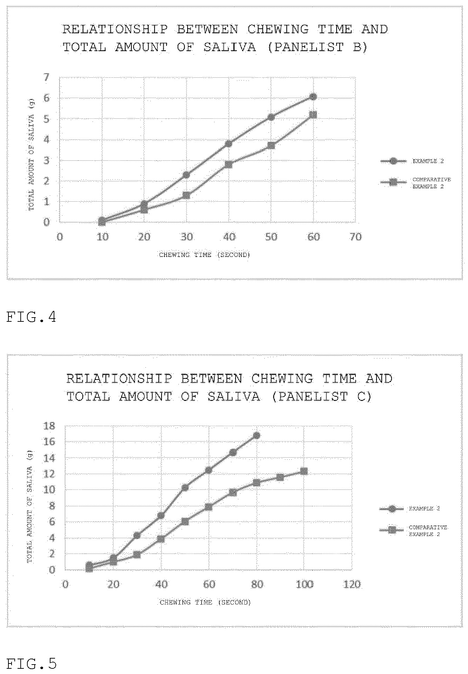

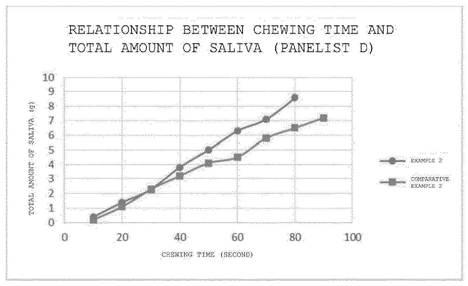

Table 4 and Figs. 2 to 5 show the relationship between the chewing time (seconds) and the total amount of saliva (g) for the soft candies of Example 2 and Comparative Example 2 when the jelly was used as the ingredient.

[Table 2]

**Table 2 (Gummy)**

| | Example 2 | Comparative Example 2 |
|---|---|---|
| Hardness of center dough (g) | 140 | 403 |
| Hardness of outer-layer dough (g) | 403 | 403 |
| Difference in sugar ratio (sugar ratio of center dough - sugar ratio of outer-layer dough) | 23.2 | 0 |

| Rating | | |
|---|---|---|
| Whether ingredient is felt | ⊚ | Δ |
| Texture like soft candy | ⊚ | ⊚ |
| Comment | | |

[Table 3]

**Table 3 (Jelly)**

| | Example 2 | Comparative Example 2 |
|---|---|---|
| Hardness of center dough (g) | 140 | 403 |
| Hardness of outer-layer dough (g) | 403 | 403 |
| Difference in sugar ratio (sugar ratio of center dough - sugar ratio of outer-layer dough) | 23.2 | 0 |

| Rating | | |
|---|---|---|
| Whether juicy feeling is felt | ⊚ | × |
| Texture like soft candy | ⊚ | ⊚ |
| Comment | | |

[Table 4]

**Table 4**

| | Example 2 | | | | Comparative Example 2 | | | |
|---|---|---|---|---|---|---|---|---|
| Hardness of center dough (g) | 140 | | | | 403 | | | |
| Hardness of outer-layer dough (g) | 403 | | | | 403 | | | |
| Chewing time (s) | Panelist A | Panelist B | Panelist C | Panelist a | Panelist A | Panelist B | Panelist C | Panelist D |
| 10 | 0.3 | 0.1 | 0.6 | 0.4 | 0.9 | 0 | 0.2 | 0.2 |
| 20 | 1 | 0.9 | 1.5 | 1.4 | 1.5 | 0.6 | 1 | 1.1 |
| 30 | 2.1 | 2.3 | 4.3 | 2.3 | 2.6 | 1.3 | 1.9 | 2.3 |
| 40 | 3.2 | 3.8 | 6.8 | 38 | 3.4 | 2.8 | 39 | 32 |
| 50 | 4.3 | 51 | 10.3 | 5 | 4.4 | 3.7 | 6.1 | 4.1 |
| 60 | 5.6 | 6.1 | 12.5 | 6.3 | 5.8 | 5.2 | 7.9 | 4.5 |
| 70 | 6.8 | | 14.7 | 71 | 6.1 | | 97 | 5.8 |
| 80 | | | 16.8 | 8.6 | | | 10.9 | 6.5 |
| 90 | | | | | | | 11.6 | 7.2 |
| 100 | | | | | | | 12.3 | |
| Average chewing time (s) | 72.5 | | | | 80 | | | |
| Average amount of saliva (g) | 9.575 | | | | 7.7 | | | |

As shown in Tables 2 and 3, in Comparative Example 2 in which the hardness of the center dough at normal temperature and the hardness of the outer-layer dough at normal temperature were the same, the tastiness (feeling of presence or juicy feeling of the ingredient) of the ingredient itself could not be felt much.

On the other hand, as shown in Tables 2 and 3, in Example 2 in which the hardness of the center dough at normal temperature was lower than the hardness of the outer-layer dough at normal temperature (that is, at normal temperature, the center dough was softer than the outer-layer dough), the tastiness (feeling of presence or juicy feeling of the ingredient) of the ingredient itself could be felt.

Further, as shown in Table 4 and Figs. 2 to 5, in Example 2 in which the hardness of the center dough at normal temperature was lower than the hardness of the outer-layer dough at normal temperature (that is, at normal temperature, the center dough was softer than the outer-layer dough), the amount of saliva secreted was larger than that in Comparative Example 2 in which the hardness of the center dough at normal temperature was the same as the hardness of the outer-layer dough at normal temperature. That is, it was revealed that Example 2 provided a stronger juicy feeling felt during eating than Comparative Example 2.

From the above, it has become clear that by reducing the hardness of the center dough at normal temperature and the hardness of the outer-layer dough at normal temperature, it is possible to produce an ingredient-stuffed soft candy that causes the tastiness of the ingredient to be felt.

### (6) Sensory Evaluation

Among the ingredient-stuffed soft candies produced as described above, Comparative Example 1, Example 1, and Examples 3 to 8 were evaluated for relative tastiness (feeling of presence or juicy feeling of the ingredient) of the ingredients themselves and texture like a soft candy based on Example 2 and Comparative Example 2.

The evaluation was performed by three or four skilled evaluators.

When the tastiness (feeling of presence or juicy feeling of the ingredient) of the ingredient itself felt for the ingredient-stuffed soft candy to be evaluated was close to that in Example 2, the rating **⊙** was given.

When the tastiness (feeling of presence or juicy feeling of the ingredient) of the ingredient itself felt for the ingredient-stuffed soft candy to be evaluated was inferior to that in Example 2 but was more clearly felt than that in Comparative Example 2, the rating o was given.

When the tastiness (feeling of presence or juicy feeling of the ingredient) of the ingredient itself felt for the ingredient-stuffed soft candy to be evaluated was inferior to that in Example 2 but was a little more strongly felt than that in Comparative Example 2, the rating △ was given.

When the tastiness (feeling of presence or juicy feeling of the ingredient) of the ingredient itself felt for the ingredient-stuffed soft candy to be evaluated was close to that in Comparative Example 2, the rating × was given.

An ingredient-stuffed soft candy rated as **⊙** by all the evaluators was rated as **⊙** in the comprehensive evaluation in terms of the tastiness of the ingredient itself.

An ingredient-stuffed soft candy rated as **⊙** by most of the evaluators (two evaluators when there are three evaluators, and three evaluators when there are four evaluators) was rated as o in the comprehensive evaluation in terms of the tastiness of the ingredient itself.

An ingredient-stuffed soft candy rated as **⊙** by a small number of the evaluators (one evaluator when there are three evaluators, and one or two evaluators when there are four evaluators) was rated as △ in the comprehensive evaluation in terms of the tastiness of the ingredient itself.

An ingredient-stuffed soft candy rated as × by all the evaluators was rated as × in the comprehensive evaluation in terms of the tastiness of the ingredient itself.

In addition, the texture like a soft candy was tested in the same manner as in the above (5). The evaluation was performed by three or four skilled evaluators.

An ingredient-stuffed soft candy rated as o by all the evaluators was rated as **⊙** in the comprehensive evaluation in terms of the texture like a soft candy.

An ingredient-stuffed soft candy rated as o by most of the evaluators (two evaluators when there are three evaluators, and three evaluators when there are four evaluators) was rated as o in the comprehensive evaluation in terms of the texture like a soft candy.

An ingredient-stuffed soft candy rated as o by a small number of the evaluators (one evaluator when there are three evaluators, and one or two evaluators when there are four evaluators) was rated as △ in the comprehensive evaluation in terms of the texture like a soft candy.

An ingredient-stuffed soft candy rated as × by all the evaluators was rated as × in the comprehensive evaluation in terms of the texture like a soft candy.

The ratings of the ingredient-stuffed soft candies (Comparative Example 1 and Examples 1 and 3 to 8) using the gummy as the ingredient are shown in the table below, and the evaluation results of the ingredient-stuffed soft candies (Comparative Example 1 and Examples 1, 3, and 5 to 7) using the jelly as the ingredient are shown in Table 6 below.

[Table 5]

**Table 5 (Gummy)**

| | Comparative Example 1 | Example 1 | Example 3 | Example 4 | Example 5 | Example 6 | Example 7 | Example 8 |
|---|---|---|---|---|---|---|---|---|
| Hardness of center dough (g) | 140 | 140 | 273 | 206 | 300 | 341 | 362 | 206 |
| Hardness of outer-layer dough (g) | 140 | 250 | 403 | 996 | 403 | 403 | 403 | 1100 |
| Difference in sugar ratio (sugar ratio of center dough - sugar ratio of cuter-layer dough) | 0 | 9.6 | 11.7 | 14.9 | 9.2 | 5.5 | 5.9 | 14.7 |

| Rating | | | | | | | | |
|---|---|---|---|---|---|---|---|---|
| Whether ingredient is felt | ⊚ | ⊚ | ⊚ | ⊚ | ○ | ○ | ○ | ○ |
| Texture like soft candy | Δ | ⊚ | ⊚ | ⊚ | ⊚ | ⊚ | ⊚ | Δ |
| Comment | The outer-layer dough is too soft. Stickinass is caused at the time of shaping | | | | | | | The outer-layer dough is too hard. |

[Table 6]

**Table 6 (Jelly)**

| | Comparative Example 1 | Example 1 | Example 3 | Example 5 | Example 5 | Example 7 |
|---|---|---|---|---|---|---|
| Hardness of center dough (g) | 140 | 140 | 273 | 300 | 341 | 362 |
| Hardness of outer-layer dough (g) | 140 | 250 | 403 | 403 | 403 | 403 |
| Difference in sugar ratio (sugar ratio of center dough - sugar ratio of outer-layer dough) | 0 | 9.6 | 11.7 | 9.2 | 5.5 | 5.9 |

| Rating | | | | | | |
|---|---|---|---|---|---|---|
| Whether juicy feeling is felt | ⊚ | ⊚ | ⊚ | ⊚ | ○ | ○ |
| Texture like soft candy | Δ | ⊚ | ⊚ | ⊚ | ⊚ | ⊚ |
| Comment | The outer-layer dough is too soft. Stickiness is caused at the time of shaping | | | | | |

As shown in Tables 5 and 6, in Comparative Example 1 in which the center dough and the outer-layer dough had the same hardness, the tastiness (feeling of presence and juicy feeling of the ingredient) of the ingredient was close to that in Example 2 (rated as ⊙), but the texture like a soft candy was poor (rated as △).

From the above, it has become clear that when the hardness of the center dough at normal temperature (20°C) is the same as the hardness of the outer-layer dough at normal temperature (20°C) it is not possible to achieve both the tastiness (feeling of presence or juicy feeling of the ingredient) of the ingredient itself and the chewing sensation like a soft candy.

On the other hand, it has been found that the soft candies in which the hardness of the center dough at normal temperature (20°C) was relatively lower than the hardness of the outer-layer dough at normal temperature (20°C) (that is, at normal temperature, the center dough was relatively softer than the outer-layer dough) of Examples 1 and 3 to 6 gave the tastiness of the ingredient itself close to that in Example 2 and the chewing sensation like a soft candy.

In addition, it has been found that when the hardness of the center dough at normal temperature was 370 g or less, at least either the feeling of the presence or juicy feeling of the ingredient could be well felt, that is, the tastiness of the ingredient itself could be well felt.

In Example 7 in which the hardness of the center dough was 362 g and Example 6 in which the hardness of the center dough was 341 g, the tastiness (feeling of presence or juicy feeling of the ingredient) of the ingredient itself was about the middle between Example 2 and Comparative Example 2 (rated as ∘).

On the other hand, in Example 5 in which the hardness of the center dough was 300 g, the tastiness (feeling of presence and juicy feeling of the ingredient) of the ingredient itself was close to that in Example 2 (rated as ∘ or ⊙).

From the above, it has become clear that it is more preferable to set the hardness of the center dough at normal temperature to 350 g or less in order to feel the tastiness (feeling of presence or juicy feeling of the ingredient) of the ingredient itself.

As shown in Tables 5 and 6, Example 5 in which the difference between the hardness of the center dough and the hardness of the outer-layer dough at normal temperature was 97 g was closer to Example 2 in the feeling of the presence and juicy feeling of the ingredient than Example 7 in which the difference between the hardness of the center dough at normal temperature and the hardness of the outer-layer dough at normal temperature was 41 g.

From the above, it has become clear that the difference between the hardness of the center dough at normal temperature and the hardness of the outer-layer dough at normal temperature is more preferably 80 g or more from the viewpoint of the tastiness (feeling of presence and juicy feeling of the ingredient) of the ingredient itself.

In Comparative Example 1 in which the outer-layer dough had a hardness of 140 g, the outer-layer dough was too soft, and the texture like a soft candy was poor (rated as △).

On the other hand, in Example 1 in which the hardness of the outer-layer dough was 250 g, the texture like a soft candy was felt (rated as ⊙ and o) .

From the above, it has become clear that it is more preferable to set the hardness of the outer-layer dough at normal temperature to 200 g or more in order to feel the tastiness of the ingredient itself and chewing sensation like a soft candy.

In Example 8 in which the hardness of the outer-layer dough was 1100 g, although the feeling of the presence and juicy feeling of the ingredient were close to those in Example 2 (rated as ∘ and ⊙), the outer-layer dough was hard and thus did not become soft easily, and the texture like a soft candy was not felt. (rated as 6).

On the other hand, in Example 4 in which the hardness of the outer-layer dough was 1000 g, the feeling of the presence and juicy feeling of the ingredient were close to those in Example 2, and the texture like a soft candy was also felt. (all rated as ⊙).

From the above, it has become clear that it is more preferable to set the hardness of the outer-layer dough at normal temperature to 1050 g or less from the viewpoint of the texture like a soft candy.

As shown in Tables 5 and 6, in the ingredient-stuffed soft candy in which the hardness of the center dough at normal temperature was lower than the hardness of the outer-layer dough at normal temperature, it has been found that at least one of the feeling of the presence and the juicy feeling of the ingredient could be felt when the difference in the sugar ratio (sugar ratio in center dough - sugar ratio in outer-layer dough) was 5 mass% or more.

It has been found that when the difference in sugar ratio was 10 mass% or more in the soft candy in which the hardness of the center dough at normal temperature was 300 g or less and in which the hardness of the outer-layer dough at normal temperature was 1050 g or less, the tastiness of the ingredient itself could be felt at a level closer to Example 2.

### <Test Example 2>

In this test example, the influence of the water content and the water activity of the center dough excluding the ingredient on the soft candy was tested.

A center dough was prepared in the same manner as in Example 2 of Test Example 1 except that the water content (mass%), the water activity value of the center dough, and the hardness of the center dough at normal temperature were changed in the center dough excluding the ingredient. The center doughs of Example 2, Example 7, and Comparative Example 3 prepared in Test Example 1 above were also continuously used.

A gummy and a jelly were used as ingredients. As the jelly, the same jelly as the jelly used in Test Example 1 was used.

As the gummy, the same gummy as in Test Example 1 was used in Example 2, Examples 9 to 12, and Comparative Example 3. In Example 7, a gummy having a weight of 0.28 g per grain, a hardness at normal temperature of 977 g, and a water content of 17 mass% was used.

These ingredients were mixed so as to be 20 mass% in the center doughs to produce ingredient-stuffed soft candies (Comparative Example 3 and Examples 2, 7, and 9 to 12). The specific compositions of the center doughs are shown in Table 7. As the outer-layer dough, an outer-layer dough (hardness at normal temperature: 403 g) having the same composition as in Example 2 was used.

The hardness at normal temperature was adjusted mainly by adjusting the sugar ratio in the same manner as in Test Example 1 above. That is, as compared with Example 2, when the hardness was intended to be increased (that is, intended to be harder than the center dough of Example 2), the sugar ratio of the center dough was decreased, and when the hardness was intended to be decreased (that is, intended to be softer than the center dough of Example 2), the sugar ratio of the center dough was increased. The sugar ratio was adjusted by adjusting the amount of sugar contained in the base and the amounts of powdered sugar, fondant, and frappe, which are auxiliary raw materials. In addition, the chain length of starch syrup, the water content value, and the amount of the fat or oil were adjusted to achieve the hardness described in Table 7 below.

[Table 7]

**Table 7**

| | | Example 9 | Example 2 | Example 7 | Coparative Example 3 | Example 10 | Example 11 | Example 12 |
|---|---|---|---|---|---|---|---|---|
| Hardness of center dough (g) | | 129.8 | 140 | 362 | 403 | 110 | 95 | 80 |
| Base | Sugar | 13 | 13 | 21 | 24 | 24 | 24 | 24 |
| | Starch syrup | 26 | 26 | 43 | 49 | 49 | 49 | 49 |
| | Vegetable fat or oil | 8 | 8 | 8 | 8 | 8 | 8 | 8 |
| | Sorbitan fatty acid ester | 0.1 | 0.1 | 0.1 | 0.1 | 0.1 | 0.1 | 0.1 |
| | Sucrose fatty acid ester | 0.1 | 0.1 | 0.1 | 0.1 | 0.1 | 0.1 | 0.1 |
| Auxiliary raw material | Powdered sugar | 33 | 33 | 8 | 0 | 0 | 0 | 0 |
| | Fondant | 21 | 21 | 15 | 13 | 13 | 13 | 13 |
| | Gelatin solution | 2.5 | 2.5 | 2.2 | 2 | 2 | 2 | 2 |
| | Frappe | 0 | 0 | 9 | 13 | 13 | 13 | 13 |
| | Citric acid | 0.7 | 0.7 | 0.7 | 0.7 | 0.7 | 0.7 | 0.7 |
| | Malic acid | 0.7 | 0.7 | 0.7 | 0.7 | 0.7 | 0.7 | 0.7 |
| | Glycerin | 0 | 0 | 0 | 0 | 0.7 | 2.7 | 3.9 |
| Total | | 105.1 | 105.1 | 107.8 | 110.6 | 111.3 | 113.3 | 114.5 |
| Sugar ratio (%) | | 70.7 | 70.7 | 53.4 | 47.5 | 47.5 | 47.5 | 47.5 |
| Water content in product (%) | | 5.9 | 6.5 | 7,8 | 8.2 | 9 | 10 | 12 |

The water content of the center dough was measured by a conventional method using sea sand as an auxiliary agent by a heating drying aid method under reduced pressure.

For the produced ingredient-stuffed soft candies, the feeling of the presence of the ingredient and the juicy feeling felt during eating of the produced soft candies were evaluated in the same manner as in "(6) Sensory Evaluation" in Test Example 1. The process suitability (shape retainability) was also evaluated.

The process suitability (shape retainability) was evaluated from the water activity value. Specifically, when the water activity value was high, the process suitability was judged as low (rated as ×), and when the water activity value was low, the process suitability was judged as high (rated as ∘).

The hardness of the ingredient was measured by the following measurement method using a texture analyzer TA.XT plus (manufactured by EKO Instruments Co., Ltd.).

### [Measurement Method]

(1) A measurement sample (ingredient) was fixed to a sample stage of the texture analyzer, and the sample temperature was maintained at 20°C. As the measurement sample, a granular, spherical, or rectangular parallelepiped sample having the longest portion of 10 mm or less and having a mass of 1 g or less per piece was selected. A relatively flat surface in the measurement sample to be measured was employed as a measurement surface.
(2) A measurement probe (cylindrical shape with a diameter of 0.9 mm) of the analyzer was lowered at a speed of 1 mm/sec, the measurement probe was made to enter a surface in the vicinity of the center of the measurement surface of the ingredient, and a load was measured within a range of a maximum load of 5 kg.
(3) When the measurement probe has penetrated the bottom surface of the ingredient, the measurement probe was raised.

In addition, for the doughs of Comparative Examples 5 and 6 and Examples 2 to 9, both of ingredient-stuffed soft candies using the gummy as the ingredient and ingredient-stuffed soft candies using the jelly as the ingredient were produced.

On the other hand, for the doughs of Comparative Example 7 and Examples 10 and 11, only ingredient-stuffed soft candies using jelly as the ingredient were produced.

The ratings of the soft candies using the gummy as the ingredient are shown in Table 8 below, and the evaluation results of the ingredient-stuffed soft candies using the jelly as the ingredient are shown in Table 9 below.

[Table 8]

**Table 8 (Gummy)**

| | Example 9 | Example 2 | Example 7 | Comparative Example 3 |
|---|---|---|---|---|
| Water content value of center dough (mass%) | 5.9 | 6.5 | 8 | 8.3 |
| Water activity value of center dough | 0.64 | 0.62 | 0.61 | 0.61 |
| Hardness of center dough (g) | 129.8 | 140 | 362 | 403 |
| Difference in sugar ratio (sugar ratio of center dough - sugar ratio of outer-layer dough) | 23.2 | 23.2 | 5.9 | 0 |

| Rating | | | | |
|---|---|---|---|---|
| Whether ingredient is felt | ⊚ | ⊚ | ⊚ | Δ |
| Process suitability (shape retainability) | ○ | ○ | ○ | ○ |
| Comment | | | Increasing the hardness of the ingredient enabled the ingredient to be felt. | |

[Table 9]

**Table 9 (Jelly)**

| | Example 9 | Example 2 | Example 7 | Comparative Example 3 | Example 10 | Example 11 | Example 12 |
|---|---|---|---|---|---|---|---|
| Water content value of center dough (mass%) | 5.9 | 6.5 | 8 | 8.3 | 9 | 10 | 12 |
| Water activity value of center dough | 0.64 | 0.62 | 0.61 | 0.61 | 0.65 | 069 | 0.1 |
| Hardness of center dough (g) | 129.8 | 140 | 362 | 403 | 110 | 95 | 80 |
| Difference in sugar ratio (sugar ratio of center dough - sugar ratio of outer-layer dough) | 23.2 | 23.2 | 5.9 | 0 | 0 | 0 | 0 |

| Rating | | | | | | | |
|---|---|---|---|---|---|---|---|
| Whether julcy feeling is felt | ⊚ | ⊚ | ○ | × | ⊚ | ⊚ | ⊚ |
| Process suitability (shape retainability) | ○ | ○ | ○ | ○ | ○ | ○ | × |
| Comment | | | | | | | Shape retainabili ty is poor because the water activity is high. |

In Example 2, Example 7, and Examples 9 to 12 in which the water content value of the center dough was 12 mass% or less, the tastiness (texture or juicy feeling of the ingredients) of the ingredients themselves can be felt to a degree close to that in Example 2 (all rated as ⊙).

From the above, it has become clear that when the water content of the center dough is 12 mass% or less, the tastiness (feeling of presence or juicy feeling of the ingredient) of the ingredient itself can be felt.

On the other hand, in Comparative Example 3 in which the hardness of the center dough and the hardness of the outer-layer dough were the same, even when the water content of the center dough was 12 mass% or less, the tastiness of the ingredient itself could be felt only to the same degree as in Comparative Example 2.

In addition, an ingredient having higher hardness at normal temperature than the ingredients used in Test Example 1 (that is, harder than the ingredients used in Test Example 1) was used in Example 7, so that the presence of the ingredient could be felt more than in Test Example 1.

On the other hand, in Example 12, although the tastiness of the ingredient itself could be felt, since the water activity value of the center dough increased due to the large water content in the center dough, the center dough became too soft, and the shape retainability was poor (rated as ×).

On the other hand, in Example Example 2, Example 7, and Examples 9 to 11 in which the water content value of the center dough was 10 mass% or less and in which the water activity value was 0.7 or less, shape retainability of a certain degree or more was provided (rated as o).

Therefore, from the viewpoint of the shape retainability of the ingredient-stuffed soft candy, it has become clear that it is more preferable to set the water content value of the center dough to 10 mass% or less and the water activity value to 0.7 or less.

In addition, it has become clear that when the water content of the center dough is 10 mass% and the water activity value is 0.7 or less, if the sugar ratio of the center dough and the sugar ratio of the outer-layer dough are the same or the sugar ratio of the center dough is larger than the sugar ratio of the outer-layer dough (that is, when difference in sugar ratio is 0 or more), it is possible to produce a soft candy that allows the tastiness of the ingredient itself to be felt and also has process suitability (shape retainability).

### <Test Example 3>

In this test example, the influence of the hardness of the ingredient contained in the center dough on the texture of the soft candy was tested.

Ingredient-stuffed soft candies were produced in the same manner as in Test Example 1 except that the ingredients were variously changed (jellies in Examples 13 to 15, dried mango in Example 16, dried prune in Example 17, gummies in Examples 18 to 21 and Comparative Example 8) and mixed with the center dough and that the compositions of the center dough and the outer-layer dough were changed to the compositions shown in Table 10 below.

In Example 13, a jelly having a water content of 17 mass% and a hardness of 109 g at normal temperature was used.

In Example 14, a jelly having a water content of 14.3 mass% and a hardness of 170 g at normal temperature was used.

In Example 15, a jelly having a water content of 11.7 mass% and a hardness of 231 g at normal temperature was used.

In Example 16, dried mango having a water content of 13.1 mass% and a hardness of 233 g at normal temperature was used.

In Example 17, dried prune having a water content of 25.0 mass% and a hardness of 180 g at normal temperature was used.

In Example 18, a gummy having a water content of 18 mass% and a hardness of 352 g at normal temperature was used.

In Example 19, a gummy having a water content of 18 mass% and a hardness of 500 g at normal temperature was used.

In Example 20, a gummy having a water content of 18 mass% and a hardness of 747 g at normal temperature was used.

In Example 21, a gummy having a water content of 12.4 mass% and a hardness of 1049 g at normal temperature was used.

In addition, the mass of every ingredient was 0.28 g per grain, and the content of every ingredient was 20 mass% in the center dough.

The hardness of each of the center dough, the outer-layer dough, and the ingredient at normal temperature was measured in the same manner as in Test Example 1 and Test Example 2.

[Table 10]

**Table 10**

| | | Examples 13 to 17 and Examples 19 to 21 | | Example 18 | |
|---|---|---|---|---|---|
| | | Center | Outer layer | Center | Outer layer |
| Hardness of dough (g) | | 140 | 403 | 140 | 273 |
| Base | Sugar | 13 | 24 | 13 | 18 |
| | Starch syrup | 26 | 49 | 26 | 38 |
| | Vegetable fat or oil | 8 | 8 | 8 | 8 |
| | Sorbitan fatty acid ester | 0.1 | 01 | 0.1 | 0.1 |
| | Sucrose fatty acid ester | 0.1 | 0.1 | 0.1 | 0.1 |
| Auxiliary raw material | Powdered sugar | 33 | 0 | 33 | 16 |
| | Fondant | 21 | 13 | 21 | 17 |
| | Gelatin solution | 2.5 | 2 | 2.5 | 2 |
| | Frappe | 0 | 13 | 0 | 6 |
| | Citric acid | 0.7 | 0.7 | 0.7 | 0.7 |
| | Malic acid | 0.7 | 0.7 | 0.7 | 0.7 |
| Total | | 105.1 | 110.6 | 105.1 | 106.6 |
| Sugar ratio (%) | | 70.7 | 47.5 | 70.7 | 592 |
| Water content in product (%) | | 8.5 | 82 | 6.5 | 7.4 |

The produced ingredient-stuffed soft candies were evaluated in the same manner as in Test Example 1 for the feeling of the presence or the juicy feeling of the ingredient, the texture like a soft candy, and process suitability (crushing of the ingredient and extensibility of the soft candy itself) for the produced ingredient-stuffed soft candies.

As for the process suitability (crushing of the ingredient and extensibility of the soft candy itself), when the center dough was mixed with the ingredient at a product temperature of 40°C, the case where the ingredient was crushed, the case where a gap was formed between the dough and the ingredient when the dough was extended after mixing and the ingredient fell off, and the case where the dough was broken were rated as ×, and other cases were rated as o.

The hardness of each ingredient and the evaluation results of the ingredient-stuffed soft candies using the jellies or dried fruit as the ingredient are shown in Table 11 below, and the ratings of the soft candies using the gummies as the ingredient are shown in Table 12 below.

[Table 11]

**Table 11 (Jelly and dried fruit)**

| | Example 13 | Example 14 | Example 15 | Example 16 | Example 17 |
|---|---|---|---|---|---|
| Hardness of center dough (g) | 140 | 140 | 140 | 140 | 140 |
| Hardness of outer-layer dough (g) | 403 | 403 | 403 | 403 | 403 |
| Hardness of jelly (g) | 109 | 170 | 231 | | |
| Hardness of dried fruit (g) | | | | 233 | 180 |
| Difference in sugar ratio (sugar ratio of center dough - sugar ratio of outer-layer dough) | 232 | 232 | 23.2 | 23.2 | 23.2 |

| Rating | | | | | |
|---|---|---|---|---|---|
| Whether juicy feeling is felt | ⊚ | ⊚ | ⊚ | ⊚ | ⊚ |
| Texture like soft candy | ⊚ | ⊚ | ⊚ | ⊚ | ⊚ |
| Process suitability (crushing of ingredient and extensibility) | ○ | ○ | ○ | ○ | Δ |

[Table 12]

**Table 12 (Gummy)**

| | Example 18 | Example 19 | Example 20 | Example 21 |
|---|---|---|---|---|
| Hardness of center dough (g) | 140 | 140 | 140 | 140 |
| Hardness of outer-layer dough (g) | 273 | 403 | 403 | 403 |
| Hardness of gummy (g) | 352 | 500 | 747 | 1049 |
| Difference in sugar ratio (sugar ratio of center dough - sugar ratio of outer-layer dough) | 11.5 | 23.2 | 23.2 | 23.2 |

| Rating | | | | |
|---|---|---|---|---|
| Whether ingredient is felt | ○ | ○ | ⊚ | ⊚ |
| Texture like soft candy | ⊚ | ⊚ | ⊚ | ⊚ |
| Process suitability (crushing of ingredient and extensibility) | ○ | ○ | ○ | ○ |
| Comment | | | | |

As shown in Table 10 and Table 11, in Examples 13 to 21 in which the hardness of the ingredient was 1050 g or less, the tastiness (feeling of presence or juicy feeling of the ingredient) of the ingredient itself and the texture like a soft candy could be felt.

From the above, it has become clear that when the hardness of the ingredient is 1050 g or less, it is possible to produce an ingredient-stuffed soft candy that allows the tastiness (feeling of presence or juicy feeling of the ingredient) of the ingredient itself to be felt and gives the chewing sensation like a soft candy.

In addition, as shown in Tables 10 and 11, it has become clear that when the hardness of the ingredient is 1050 g or less, setting the difference in sugar ratio to 10 or more enables production of an ingredient-stuffed soft candy that enables the tastiness of the ingredient itself to be felt.

### <Test Example 4>

In this test example, the influence of the amount of the ingredient in the center dough on the feeling of the presence and the juicy feeling of the ingredient felt during eating was tested.

Soft candies were produced in the same manner as in Example 2 of Test Example 1 except that the hardness of the center dough at normal temperature was changed to 140 g, the hardness of the outer-layer dough was changed to 403 g, and the amount of the ingredient (gummy and jelly) was changed as shown in Tables 10 and 11 below.

The same ingredients as those in Test Example 1 were used.

The produced ingredient-stuffed soft candies were evaluated for the feeling of the presence and the juicy feeling of the ingredient in the same manner as in Test Example 1. Furthermore, the chewing sensation like a soft candy and process suitability (crushing of the ingredient and continuity of the dough) were evaluated.

When the chewing sensation and firmness to the tooth unique to a soft candy could be enjoyed at the time of eating of the ingredient-stuffed soft candy, the chewing sensation like a soft candy was rated as ⊙. When the chewing sensation and firmness to the tooth like a soft candy could be enjoyed to some extent at the time of eating, the rating o was given. When the chewing sensation and firmness to the tooth like a soft candy could not be enjoyed at the time of eating, the rating × was given.

As for the process suitability (crushing of the ingredient and continuity of the dough), when the center dough was mixed with the ingredient at a product temperature of 40°C, the case where the ingredient was crushed, the case where a gap was formed between the dough and the ingredient when the dough was extended after mixing and the ingredient fell off, and the case where the dough was broken were rated as ×, and other cases were rated as o.

The results when the gummy was used as the ingredient are shown in Table 13 below, and the results when the jelly was used as the ingredient are shown in Table 14 below.

[Table 13]

**Table 13 (Gummy)**

| | Exemple 22 | Example 23 | Example 24 | Example 25 | Example 26 | Example 27 |
|---|---|---|---|---|---|---|
| Amount of ingredient in center dough (mass%) | 12 | 20 | 30 | 40 | 50 | 60 |
| Difference in sugar ratio (sugar ratio of center dough - sugar ratio of outer-layer dough) | 23.2 | 23.2 | 23.2 | 232 | 232 | 23.2 |

| Rating | | | | | | |
|---|---|---|---|---|---|---|
| Whether ingredient is felt | △ | ⊚ | ⊚ | ⊚ | ⊚ | ⊚ |
| Chewing sensation like soft candy | ⊚ | ⊚ | ⊚ | ○ | × | × |
| Process suitability (crushing of ingredient and continuity of dough) | ○ | ○ | ○ | △ | × | × |
| Comment | | | | | The chewing sensation like a soft candy is lost because the amount of the ingredient is too large. Process suitability is also poor. | The chewing sensation like a soft candy is lost because the amount of the ingredient is too large. Process suitability is also poor. |

[Table 14]

**Table 14 (Jelly)**

| | Example 22 | Erample 23 | Example 24 | Example 25 | Example 26 | Example 27 |
|---|---|---|---|---|---|---|
| Amount of ingredient in center dough (mass%) | 12 | 20 | 30 | 40 | 50 | 60 |
| Difference in sugar ratio (sugar ratio of center dough - sugar ratio of outer-layer dough) | 23.2 | 23.2 | 232 | 232 | 23.2 | 23.2 |

| Rating | | | | | | |
|---|---|---|---|---|---|---|
| Whether juicy feeling is felt | ○ | ⊚ | ⊚ | ⊚ | ⊚ | ⊚ |
| Chewing sensation like soft candy | ⊚ | ⊚ | ⊚ | ○ | × | × |
| Process suitability (crushing of ingredient and continuity of dough) | ○ | ○ | ○ | △ | × | × |
| Comment | | | | | The chewing sensation like a soft candy is lost because the amount of the ingredient is too large. Process suitability is also poor. | The chewing sensation like a soft candy is lost because the amount of the ingredient is too large. Process suitability is also poor. |

As shown in Table 13 and Table 14, in Examples 22 to 27 in which the amount of the ingredient in the center dough was 10 mass% or more with respect to the center dough, the tastiness (feeling of presence or juicy feeling of the ingredient) of the ingredient itself could be felt.

From the above, it has become clear that when the amount of the ingredient in the center dough is 10 mass% or more with respect to the center dough, it is possible to feel the tastiness of the ingredient itself.

In addition, in Example 26 and Example 27 in which the amounts of the ingredient in the center doughs were 50 mass% and 60 mass%, respectively, with respect to the center dough, the tastiness (feeling of presence or juicy feeling of the ingredient) of the ingredient itself could be felt (both rated as ⊙), but the amounts of the ingredient were too large, the chewing sensation and firmness to the tooth like a soft candy were impaired, and the chewing sensation like a soft candy was lost (rated as ×). The production suitability was also poor (rated as ×).

From the above, it has become clear that the amount of the ingredient in the center dough is more preferably 45 mass% or less with respect to the center dough from the viewpoint of the chewing sensation like a soft candy and production suitability.

### <Test Example 5>

In this test example, the influence of the mass of the ingredient on the texture of the soft candy was tested.

Ingredient-stuffed soft candies were produced using the same ingredients (gummy and jelly) as in Test Example 1 except that the mass of the ingredient was changed to 0.04 g, 0.07 g, 0.1 g, 0.14 g, and 0.28 g per grain. The amount of the ingredient was the same as in Test Example 1 (20 mass% in the center dough).

The produced ingredient-stuffed soft candies were evaluated for the feeling of the presence and the juicy feeling of the ingredient in the same manner as in Test Example 1.

The results when the gummy was used as the ingredient are shown in Table 15 below, and the results when the jelly was used as the ingredient are shown in Table 16 below.

[Table 15]

**Table 15 (Gummy)**

| | Example 28 | Example 29 | Example 30 |
|---|---|---|---|
| Size of ingredient (g/grain) | 0.1 | 0.14 | 0.28 |
| Difference in sugar ratio (sugar ratio of center dough - sugar ratio of outer-layer dough) | 23.2 | 23.2 | 23.2 |

| Rating | | | |
|---|---|---|---|
| Whether ingredient is felt | ○ | ⊚ | ⊚ |
| Comment | | | |

[Table 16]

**Table 16 (Jelly)**

| | Example 28 | Example 29 | Example 30 |
|---|---|---|---|
| Size of ingredient (g/grain) | 0.1 | 0.14 | 0.28 |
| Difference in sugar ratio (sugar ratio of center dough - sugar ratio of outer-layer dough) | 23.2 | 23.2 | 23.2 |

| Rating | | | |
|---|---|---|---|
| Whether juicy feeling is felt | ○ | ⊚ | ⊚ |

As shown in Table 15 and Table 16, in Examples 28 to 30 in which the mass of the ingredient was 0.1 g or more per grain, the tastiness (feeling of presence and juicy feeling of the ingredient) of the ingredient itself could be felt (all rated as ∘ or ⊙).

From the above, it has become clear that when the mass of the ingredient is 0.1 g or more per grain, the tastiness (feeling of presence and juicy feeling of the ingredient) of the ingredient itself can be felt.

### <Test Example 6>

In this test example, the influence of the water content of the ingredient on the texture of the soft candy was tested.

Ingredient-stuffed soft candies were produced in the same manner as in Example 2 except that a jelly, dried papaya, a gummy, and dried prune were used as ingredients.

In Example 32 (jelly as the ingredient) and Example 33 (gummy as the ingredient), the same ingredients as in Example 2 were used.

Dried papaya having a water content of 7.3 mass% and a hardness of 173 g at normal temperature was used. Dried prune having a water content of 25 mass% and a hardness of 180 g at normal temperature was used.

In addition, ingredients all having a mass of 0.28 g per grain were used as the ingredients, and the ingredients were added so as to be 20 mass% in the center doughs.

The produced ingredient-stuffed soft candies were evaluated for the feeling of the presence and the juicy feeling of the ingredient in the same manner as in Test Example 1. In addition, "-" in Table 17 indicates that evaluation was not performed from that viewpoint.

The results are shown in Table 17 below.

[Table 17]

**Table 17**

| | Example 31 | Example 32 | Example 33 | Example 34 |
|---|---|---|---|---|
| Type of ingredient | Dried papaya | Pectin jelly | Gummy | Dried prune |
| Water content value of ingredient (mass4) | 7.3 | 17 | 18 | 25 |
| Water activity of ingredient | 0.42 | 0.55 | 0.63 | 0,7 |
| Difference in sugar ratio (sugar ratio of center dough - sugar ratio of outer-layer dough) | 23.2 | 23.2 | 23.2 | 23.2 |

| Rating | | | | |
|---|---|---|---|---|
| Whether ingredient is felt | 0 | - | ⊚ | - |
| Whether juicy feeling is felt | ⊚ | ⊚ | - | ⊚ |
| Comment | | | | The above value is set to be the upper limit considerin g the risk of bacteria . |

As shown in Table 17, in Examples 31 to 34 in which the water content of the ingredient itself was 7 mass% or more, the texture of the ingredient could be felt, and the juicy feeling could also be felt (all rated as ⊙).

From the above, it has become clear that when the water content of the ingredient is 7 mass% or more, the tastiness (texture and/or juicy feeling of the ingredient) of the ingredient itself can be felt.

However, from the viewpoint of the risk of bacteria in the distribution process, the water content of the ingredient is more preferably 25 mass% or less (see the comment field of Example 34).

### Industrial Applicability

The present invention can provide a soft candy that provides tastiness (feeling of presence or juicy feeling of the ingredient) of the ingredient itself, the texture like a soft candy, and the feeling of integration between the ingredient and the soft candy dough.

### Reference Signs List

- 10: Ingredient-stuffed soft candy
- 11: Center dough
- 12: Outer-layer dough
- 13: Ingredient

## Claims

1. An ingredient-stuffed soft candy comprising:
an ingredient; a center dough containing the ingredient; and an outer-layer dough covering the center dough,
wherein the ingredient has a hardness of 1050 g or less at normal temperature, and
a hardness of the center dough at normal temperature is relatively lower than a hardness of the outer-layer dough at normal temperature.

2. The ingredient-stuffed soft candy according to claim 1, wherein the hardness of the center dough at normal temperature is 370 g or less as measured by a measurement method below:
[Measurement Method]
(1) the dough is formed into a cylinder or a rectangular parallelepiped having a thickness of 11 mm and having a measurement surface including a circle having a diameter of 11 mm to provide a shaped product;
(2) the shaped product is fixed to a sample stage of a texture analyzer, and a product temperature is maintained at 20°C;
(3) a measurement probe (cylindrical shape with a diameter of 0.9 mm) of the analyzer is lowered at a speed of 1 mm/sec, the measurement probe is made to enter a surface in a vicinity of a center of the measurement surface of the shaped product, and a load is measured within a range of a maximum load of 5 kg; and
(4) when the measurement probe has entered 14 mm from the surface of the shaped product, the measurement probe is raised.

3. The ingredient-stuffed soft candy according to claim 1 or 2, wherein the hardness of the outer-layer dough at normal temperature is 150 to 1100 g as measured by the measurement method.

4. The ingredient-stuffed soft candy according to any one of claims 1 to 3, wherein a sugar ratio of the center dough is higher than a sugar ratio of the outer-layer dough.

5. The ingredient-stuffed soft candy according to claim 4, wherein a water content of the outer-layer dough is larger than a water content of the center dough.

6. The ingredient-stuffed soft candy according to any one of claims 1 to 5,
wherein a water content of the center dough is 12 mass% or less with respect to the entire center dough excluding the ingredient, and
a water activity of the center dough is 0.7 or less.

7. The ingredient-stuffed soft candy according to any one of claims 1 to 6, wherein a content of the ingredient with respect to the center dough is 40 mass% or less.

8. The ingredient-stuffed soft candy according to any one of claims 1 to 7, wherein the ingredient is a gel-like food composition or dried fruit.
